**Europäisches Patentamt**

**European Patent Office**

**Office européen des brevets**

(19)

(11) Numéro de publication : **0 143 057**
**B1**

(12) **FASCICULE DE BREVET EUROPÉEN**

(45) Date de publication du fascicule du brevet :
28.06.89

(51) Int. Cl.⁴ : **B 65 G 65/46**

(21) Numéro de dépôt : **84402376.2**

(22) Date de dépôt : **21.11.84**

(54) **Dispositif d'extraction notamment pour silos à base circulaire.**

(30) Priorité : **22.11.83 FR 8318560**

(43) Date de publication de la demande :
**29.05.85 Bulletin 85/22**

(45) Mention de la délivrance du brevet :
**28.06.89 Bulletin 89/26**

(84) Etats contractants désignés :
**AT BE CH DE GB IT LI LU NL SE**

(56) Documents cités :
**FR—A— 2 341 506**
**FR—A— 2 424 209**
**FR—A— 2 463 085**
**FR—A— 2 539 723**

(73) Titulaire : **Cantenot, Laurence**
**12 Avenue de la Division Leclerc**
**F-92340 Bourg-la-Reine (FR)**

(72) Inventeur : **Cantenot, Laurence**
**12 Avenue de la Division Leclerc**
**F-92340 Bourg-la-Reine (FR)**

(74) Mandataire : **Bonnetat, Christian et al**
**Cabinet PROPI Conseils 23 rue de Léningrad**
**F-75008 Paris (FR)**

## Description

La présente invention concerne un dispositif d'extraction utilisant une vis sans fin entraînée dans un mouvement de balayage selon un parcours angulaire de 360° et permettant de couvrir la base circulaire d'un silo contenant une matière en vrac par exemple granuleuse ou pulvérulente.

On connaît de nombreux dispositifs utilisant une vis d'archimède apte à balayer angulairement la base circulaire d'un silo et ramenant vers le centre la matière entraînée par la vis ; cette matière étant évacuée en position centrale par une ouverture, par exemple un entonnoir d'évacuation, vers un organe de reprise, par exemple un transporteur positionné à un niveau inférieur au plancher du silo.

De façon conventionnelle, le moteur d'entraînement de la vis sans fin est positionné à l'aplomb de l'entonnoir d'évacuation et la motorisation de la vis est abritée par un cône de protection supérieur sur lequel repose la matière en vrac.

Les dispositifs de ce genre rencontrent le problème qui est celui de la recherche des points d'appui nécessaires pour l'extrémité motorisée de la vis sans fin, étant observé que la vis doit pouvoir parcourir angulairement un angle de 360° de façon à desservir l'ensemble de l'embase circulaire du silo.

Par ailleurs, il est également nécessaire de respecter le maximum de section libre pour le passage de la matière au niveau de l'ouverture d'évacuation par exemple à la base (inversée) de l'entonnoir d'évacuation.

Selon le document FR-A-2 156 504, l'ensemble vis et son système de motorisation sont suspendus au centre d'une poutre diamétrale traversant l'ensemble du silo et dont la section en V renversé permet la protection de la vis et de sa motorisation et l'écoulement régulier du produit. Ce système autorise par ailleurs des commodités d'accès jusqu'à l'ensemble de motorisation tout en libérant intégralement la section de passage de l'entonnoir d'évacuation ; toutefois ce dispositif qui a donné satisfaction ne convient plus pour des silos de très grandes dimensions répondant aux besoins actuels et dont le diamètre, et par conséquent la portée de la poutre diamétrale, dépasserait une dizaine de mètres, entraînant des contraintes de flexion et une flèche excessive.

On connaît par le document FR-A-2 341 506 un entre dispositif d'extraction pour silos à base circulaire. Par rapport à l'état de la technique reflété par ce document, qui concerne un dispositif d'extraction pour silos à base circulaire et évacuation à partir d'une ouverture en forme d'entonnoir central et reprise par un transporteur en position inférieure par rapport au plancher du silo, le dispositif comportant une vis sans fin entraînée par un moteur en position sensiblement centrale et apte à balayer angulairement la base du tas à proximité du plancher en ramenant le produit vers l'entonnoir d'évacuation, un support central fixe reposant sur un point d'appui inférieur venu de la structure fixe du silo et supportant un couvercle de protection de forme générale conique fixe et apte à abriter ledit moteur d'entraînement de la vis et l'orifice constituant l'entonnoir d'évacuation, le dispositif selon l'invention est caractérisé en ce que d'une part ledit support central est constitué d'un pivot prenant appui sur la base du silo et d'autre part, en ce que l'ensemble constitué par la vis et sa motorisation est supporté étant monté solidaire d'une couronne tournante montée à rotation sur une couronne fixe solidaire de la structure fixe du silo, la couronne tournante, solidaire de l'ensemble vis et motorisation, étant apte à subir l'action d'un organe d'entraînement tel qu'un second moteur apte à faire tourner l'ensemble constitué par la vis et sa motorisation dans son mouvement de balayage angulaire horizontal du fond du silo, selon un mouvement continu d'angle supérieur à 360°.

De préférence, l'ensemble constitué par la vis et sa motorisation est monté solidaire d'une structure tournante en forme de couronne et montée à rotation sur une couronne fixe solidaire de la structure fixe du silo, la couronne tournante, solidaire de l'ensemble vis et motorisation, étant apte à subir l'action d'un organe d'entraînement tel qu'un pignon ou galet venu d'un second moteur apte à faire tourner l'ensemble constitué par la structure tournante portant la vis et sa motorisation, dans son mouvement de balayage angulaire horizontal du fond du silo.

Selon une autre caractéristique, la structure tournante est constituée d'un carter de protection de forme générale cylindrique, sensiblement concentrique au pivot central et pourvu d'une ouverture sur sa paroi pour le passage de la vis et de la matière entraînée par elle vers l'entonnoir d'évacuation central, le carter cylindrique étant solidaire d'une couronne, telle qu'une couronne dentée, recevant l'action d'un pignon d'entraînement venu du second moteur et ainsi apte à provoquer la rotation du carter cylindrique porteur de l'ensemble vis et motorisation.

Selon une forme de réalisation plus particulière, la couronne fixe est montée solidaire des bords inférieurs du couvercle ou cône de protection et la structure tournante est ainsi montée à rotation, étant suspendue par l'intermédiaire d'un palier tel que palier à billes, au bord inférieur dudit couvercle de protection, le second moteur d'entraînement de la structure tournante étant monté solidaire de la paroi de ce couvercle.

Selon une variante, la couronne fixe est montée solidaire de la dalle constituant le plancher du silo et elle entoure sensiblement le pourtour de l'orifice ou entonnoir d'évacuation, la structure tournante portant l'ensemble vis et motorisation repose ainsi sur la couronne fixe sur laquelle elle est montée à rotation par l'intermédiaire de moyens de roulement, tels que paliers à billes ou à galets, et le second moteur d'entraînement de la structure tournante est solidaire de la dalle, étant monté sur la paroi interne de l'orifice ou entonnoir d'évacuation.

Selon une forme de réalisation plus particulière, le couvercle ou cône de protection reposant sur le pivot central est lui-même solidaire d'une poutre radiale rejoignant la paroi du silo, ladite poutre étant prévue avec une section en V renversé.

Dans ce dernier cas, la poutre radiale à section en V renversé est prévue avec un dimensionnement lui permettant de constituer un organe de protection de la vis d'extraction en position de repos et elle contient intérieurement le second moteur entraînant la structure tournante porteuse de l'ensemble vis et motorisation.

On peut alors prévoir que la poutre abrite au moins un conduit de fluide de refroidissement débouchant d'un côté à l'extérieur et accédant à la zone constituée par l'espace disposé au droit du cône de protection, ce conduit permettant l'évacuation des calories dégagées par le moteur d'entraînement de la vis sans fin et le second moteur entraînant la structure tournante.

La motorisation de la vis peut être assurée par un moteur électrique relié au circuit d'alimentation par des contacts tournants montés sur le pivot fixe.

Selon une caractéristique avantageuse, le pivot central porteur du couvercle ou cône de protection est lui-même constitué d'un axe cylindrique creux et il contient intérieurement les circuits d'alimentation respectivement du moteur d'entraînement de la vis sans fin et du second moteur provoquant la rotation de la structure tournante, le pivot cylindrique étant pourvu d'organes permettant la connexion entre lesdits circuits fixes et les raccordements tournants rejoignant le moteur d'entraînement de la vis, tels que des contacts ou joints tournants.

Selon encore une caractéristique, le pivot central est relié aux parois de l'entonnoir ou orifice d'évacuation·par l'intermédiaire de traverses montées à angle droit et formant un croisillon dont les extrémités sont scellées dans l'épaisseur de la dalle formant le plancher du silo.

· D'autres caractéristiques et avantages de l'invention apparaîtront de la description qui suit avec référence aux dessins annexés.

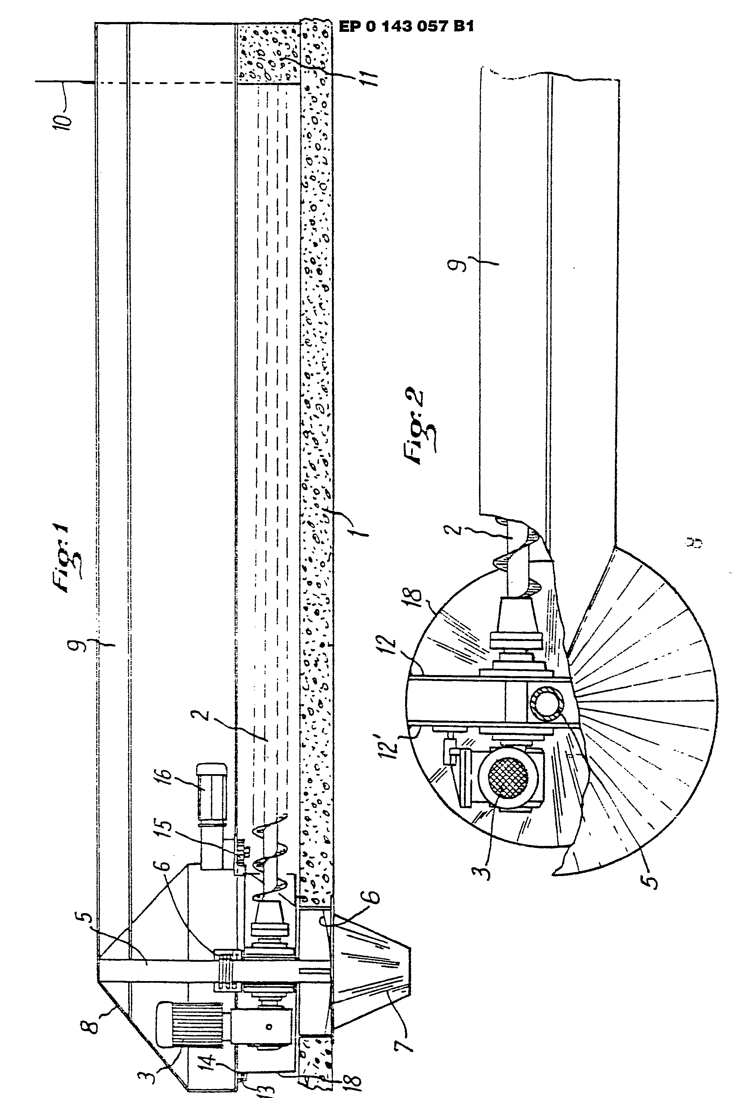

La figure 1 représente une vue en coupe horizontale au niveau de la poutre radiale, d'une installation d'extraction conforme à l'invention équipée d'une commande électrique.

La figure 2 représente une vue en plan de l'installation de la figure 1.

La figure 3 représente une vue en coupe, au niveau de la poutre radiale, de dispositifs d'extraction selon l'invention équipés d'une motorisation hydraulique.

La figure 4 représente une vue en plan du dispositif de la figure 3.

La figure 5 représente une vue en détail du roulement du carter porteur de la vis motorisée.

La figure 6 représente une vue en coupe verticale d'une variante du dispositif, la coupe suivant la ligne VI-VI de la figure 7.

La figure 7 représente une vue en plan selon deux niveaux du dispositif de la figure 6.

La figure 8 représente une vue en coupe verticale d'une variante. Selon les figures 1 à 4 on voit que l'extraction est assurée, de façon connue en soi, au niveau immédiatement supérieur au plancher 1 du silo, par une vis sans fin 2 disposée radialement à la base du silo et entraînée soit par un moteur électrique 3 pourvu d'un réducteur (figures 1 et 2), soit par un moteur hydraulique 4 (figures 3 et 4).

Un pivot central ou arbre vertical 5 repose sur un croisillon 6 ancré au sommet de l'entonnoir d'évacuation centrale 7.

Le croisillon 6 permet un ancrage ferme du pivot central 5. Mais le pivot pourrait être érigé à partir de l'infrastructure sans appui sur les parois de l'entonnoir.

A son sommet le pivot 5 est solidaire, de façon connue en soi, d'un couvercle ou cône de protection 8, et ce cône est lui-même maintenu fermement par la poutre radiale 9.

Cette poutre 9 est, de façon connue en soi, prévue avec un profil sous forme d'un V renversé permettant par conséquent l'écoulement de la matière de part et d'autre de la poutre radiale. Elle rejoint la paroi périphérique 10 du silo et elle est ancrée à son extrémité extérieure sur un socle en ciment 11.

Son extrémité centrale rejoint et est montée solidaire, par exemple par soudure, de la paroi extérieure conique du couvercle ou cône de protection 8.

Ainsi le pivot central 5 est-il maintenu à sa base et à son sommet, ce qui lui assure un positionnement et un ancrage ferme permettant de résister aux efforts et sollicitations du mouvement de la vis tant dans sa rotation selon son axe pour l'entraînement de la matière que dans son mouvement de balayage horizontal parcourant angulairement la base du silo au ras du plancher 1.

L'ensemble vis et motorisation est positionné de façon tangentielle par rapport au pivot central fixe 5, l'axe tangentiel de la vis motorisée étant lui-même entraîné dans son mouvement de balayage horizontal autour de l'axe central occupé par le pivot 5.

A cet effet, l'ensemble vis 2 et sa motorisation 4, dans l'exemple réalisé, est monté solidaire d'un carter cylindrique tournant 18, par l'intermédiaire des traverses 12, 12'.

Le carter cylindrique 18 est solidaire à son sommet de la couronne extérieure dentée 13 montée, par l'intermédiaire d'un palier à galets, sur une couronne concentrique fixe 14, elle-même solidaire de la structure fixe constituée par l'embase du couvercle conique 8.

La couronne tournante 13, concentrique et en appui sur la couronne fixe 14, subit l'action d'un organe d'entraînement, par exemple d'un pignon 15 entraîné par une unité de motorisation électrique 16 ou hydraulique 17.

Le pignon 15 entraîne la rotation de la couronne dentée 13 qui entraîne par conséquent la rotation selon un plan horizontal de l'ensemble de la structure tournante formée par le carter cylindrique 18 supportant la vis 2 et sa motorisation en assurant ainsi le balayage angulaire, selon l'axe vertical du pivot 5, de la base du silo au niveau du plancher 1, ce mouvement s'accompagnant de la rotation de la vis sur elle-même entraînée par sa motorisation électrique 3 ou hydraulique 4.

Au sommet intérieur de la poutre radiale 9, on peut faire passer des canalisations (non représentées) permettant le passage de fluide de refroidissement pour évacuer les calories depuis l'espace intérieur situé au droit du cône de protection 8 et où s'opèrent les dégagements de chaleur liés au fonctionnement des moteurs notamment électriques 3.

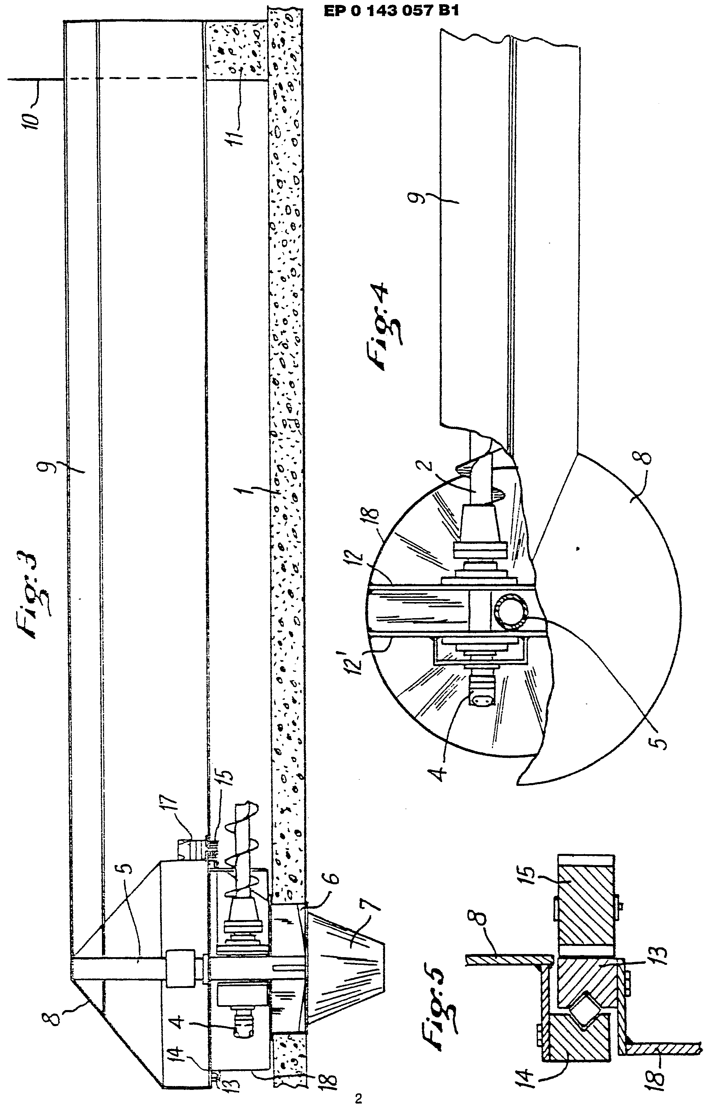

Dans le cas de l'utilisation d'un moteur hydraulique (figures 3 et 4), l'évacuation des calories pourra être effectuée par les circuits hydrauliques eux-mêmes.

Mais la poutre abrite également les canalisations amenant la force motrice depuis l'extérieur jusqu'au système de motorisation de la vis et constitués soit de câbles électriques rejoignant le moteur 3 par l'intermédiaire de contacts tournants 6 ; dans le cadre de l'utilisation d'une unité de motorisation hydraulique 4 (figures 3 et 4), le passage entre le moteur 4 tournant autour de l'axe 5 et l'alimentation et le retour fixe en fluide hydraulique peut être obtenu de façon conventionnelle par l'utilisation de joints tournants.

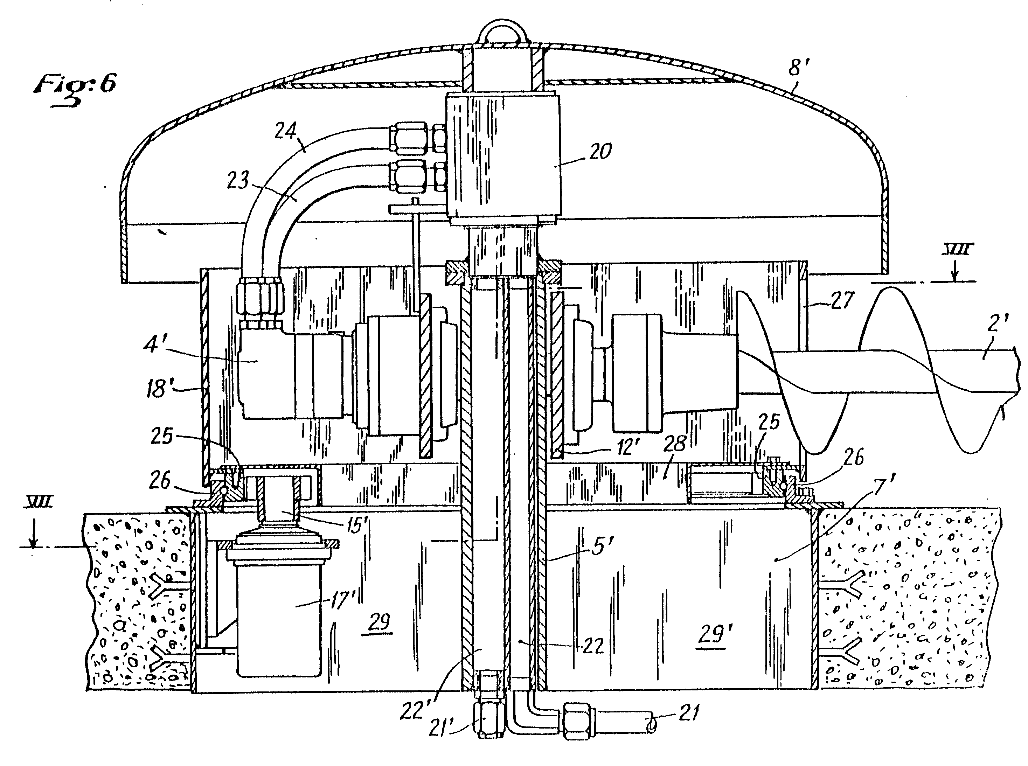

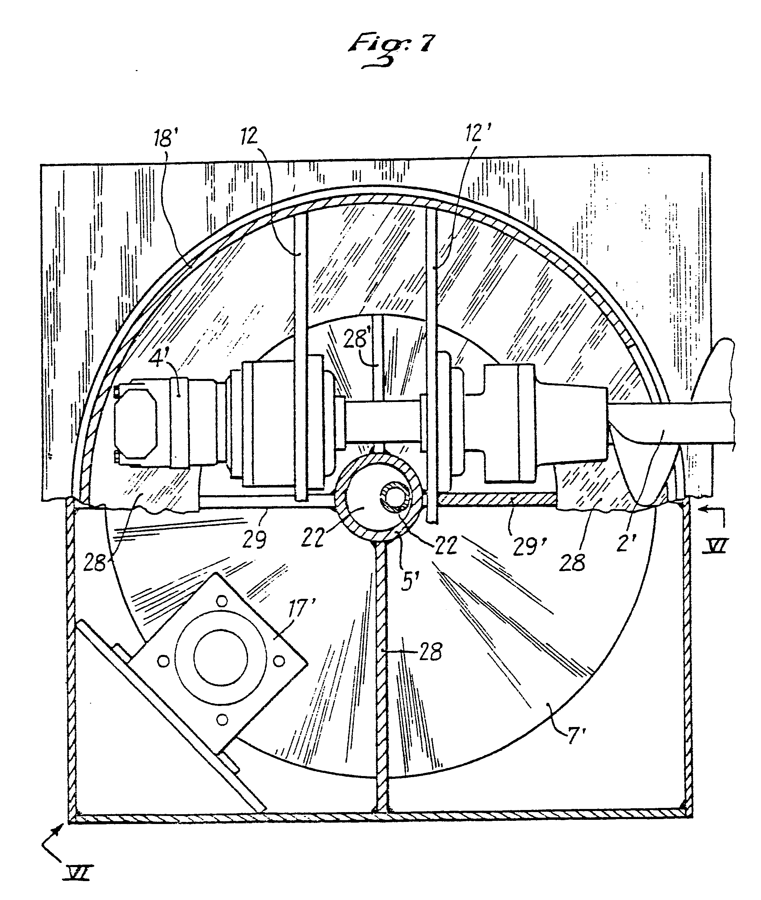

Les figures 7 et 6 concernent une variante de réalisation dans laquelle le cône de protection 8' qui est ici en forme de couvercle à fond de profil généralement parabolique prolongé par des bords cylindriques, est monté sur le pivot central fixe 5' dont il est solidaire, sans être par ailleurs raccordé à la paroi du silo par une poutre comme dans les exemples précédents.

La motorisation de la vis 2' est assurée par un moteur hydraulique 4' monté dans une structure tournante constituée par le carter cylindrique 18' auquel le moteur 4' est raccordé par les traverses 12, 12' rejoignant deux bords diamétralement opposés du cylindre 18' ; on précisera que sur la figure 7 on distingue les deux moitiés supérieure et inférieure de la figure ; la vue en plan de la figure correspond à une coupe horizontale prise suivant la ligne VII-VII de la figure 6 ; tandis que la vue en coupe de la figure 6 représente une coupe verticale suivant la ligne VI-VI de la figure 7.

Comme l'alimentation du moteur 4' ne peut pas suivre la poutre radiale qui ici n'existe pas, on a prévu dans cette forme de réalisation une alimentation depuis la structure inférieure.

On retrouve le joint tournant qui est ici illustré plus en détails sous la référence 20, et qui permet l'alimentation du moteur 4' porté par la structure tournante 18' depuis le point fixe que constitue le pivot central 5'.

Les canalisations d'alimentation 21 et 21' correspondant par exemple à l'arrivée et au retour du fluide hydraulique, traversent l'infrastructure du silo et débouchent dans les canalisations intérieures au pivot 5' et constituées par la gaine 21' et l'espace 22' au sein du pivot cylindrique 5' ; au-delà du joint tournant 20, les flexibles 23 et 24 rejoignent le moteur 4'.

Le cylindre 18' constituant le carter tournant porteur de l'ensemble vis 2' et motorisation 4' est ici en appui rotatif sur un palier inférieur.

La couronne dentée 25 est montée à la base du cylindre 18' par l'intermédiaire de l'anneau 25 et elle est montée à rotation sur la couronne extérieure fixe 26, par exemple par l'intermédiaire d'un palier ou roulement à billes ou à galets de type connu.

La couronne fixe est positionnée en position périphérique par rapport au bord de l'entonnoir 7' et elle est solidaire de la dalle constituant le plancher du silo.

La couronne mobile 25, supportant le carter cylindrique tournant 18', peut être entraînée en rotation par le pignon 15', lui-même mû depuis le moteur 17' qui peut être un moteur hydraulique ; et comme le moteur 17' est fixe, il peut être alimenté par des canalisations fixes (non représentées).

Le moteur 17' entraîne ainsi en rotation le galet 15' qui provoque le mouvement tournant de la structure constituée par le carter cylindrique 18' portant l'ensemble vis 2' et motorisation 4' et provoquant ainsi le mouvement de balayage de l'embase du silo en ramenant les matières granuleuses ou pulvérulentes entraînées par la vis 2' vers le centre et leur évacuation par l'entonnoir 7'.

Le cylindre 18' comporte un passage ou ouverture 27 dans sa paroi pour permettre la rotation de la vis 2' et l'entraînement centripète des matières.

La couronne tournante 25 et le pignon 15' sont protégés de la contamination des matières pulvérulentes en cours d'évacuation par la cloison de révolution 28.

Il est entendu que le pivot cylindrique central 5' pourrait contenir intérieurement des canalisations véhiculant les courants d'alimentation dans le cas d'un moteur électrique entraînant la vis et dans ce cas, le passage depuis le pivot central fixe 5' vers le moteur s'effectuerait par des contacts tournants ; le pivot central 5' pourrait également contenir intérieurement des canalisations assurant l'arrivée de flux d'air frais pour assurer le refroidissement des moteurs.

Le pivot 5 repose sur le croisillon constitué des traverses 28, 28', 29, 29'.

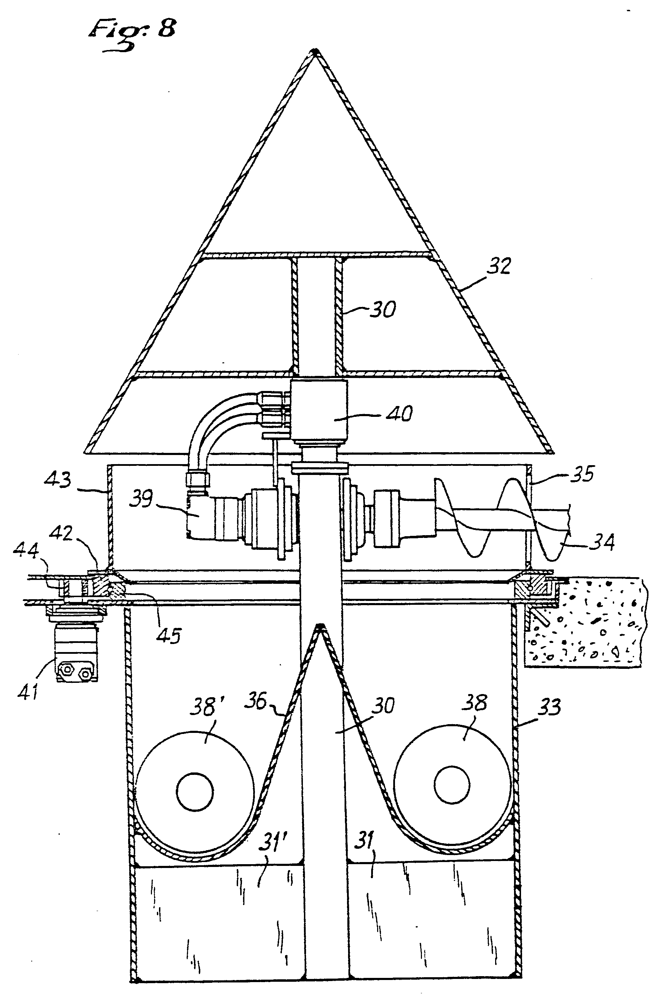

La figure 8 représente une variante dans laquelle le pivot central 30 est ancré à sa base dans la structure qui constitue l'embase du silot. Le pivot 30 est ainsi fermement maintenu par un ensemble de traverses 31, 31' formant ensemble un croisillon qui assure le positionnement ferme et correct et l'ancrage du pilier ou pivot tubulaire central 50.

Dans cette forme de réalisation, le pilier 30 est effectivement érigé depuis sa base jusqu'au sommet porteur du cône de protection 32 et il est maintenu fermement par son ancrage sur les traverses 31 et 31' elles-mêmes solidaires des parois 33 du puits d'évacuation central ; on évite ainsi d'encombrer la zone de passage qui permet l'évacuation des produits amenés par la vis 34 ; dans ce cas les matières traversent l'ouverture 35 pour se déverser dans le puits d'évacuation défini par la paroi cylindrique 33.

Le puits défini par le cylindre 33 se partage lui-même par la cloison médiane 36 en deux lits demi-cylindriques 37 et 37' desservis chacun par une vis qui achemine les matières déversées depuis la partie supérieure vers l'extérieur.

Dans cette forme de réalisation, les circuits desservant le moteur hydraulique 39 passent, comme précédemment décrit, à l'intérieur du pivot central 30 pour aboutir au joint tournant 40.

Dans la forme ici décrite, le moteur 41 prévu pour l'entraînement du carter 42 est disposé en position extérieure par rapport au puits 33, ce qui permet de dégager la zone de passage d'évacuation ; dans ce cas, la couronne 42 solidaire du carter cylindrique 43 et attaquée par le pignon 44 venu du moteur d'entraînement 41, repose sur la couronne intérieure 45 par l'intermédiaire d'un palier à billes.

**Revendications**

1. Dispositif d'extraction pour silos à base circulaire et évacuation à partir d'une ouverture en forme d'entonnoir central et reprise par un transporteur en position inférieure par rapport au plancher du silo, le dispositif comportant une vis sans fin (2) entraînée par un moteur (4) en position sensiblement centrale et apte à balayer angulairement la base du tas à proximité du plancher (1) en ramenant le produit vers l'entonnoir d'évacuation (7), un support central fixe reposant sur un point d'appui inférieur venu de la structure fixe du silo et supportant un couvercle de protection (8) de forme générale conique fixe et apte à abriter ledit moteur d'entraînement de la vie et l'orifice constituant l'entonnoir d'évacuation et le dispositif est caractérisé en ce que d'une part ledit support central est constitué d'un pivot (5) prenant appui sur la base du silo et d'autre part, en ce que l'ensemble constitué par la vis (2) et sa motorisation (4) est supporté étant monté solidaire d'une couronne tournante (13, 25) montée à rotation sur une couronne fixe (14, 26) solidaire de la structure fixe du silo, la couronne tournante, solidaire de l'ensemble vis et motorisation, étant apte à subir l'action d'un organe d'entraînement tel qu'un second moteur (17, 17') apte à faire tourner l'ensemble constitué par la vis et sa motorisation dans son mouvement de balayage angulaire horizontal du fond du silo, selon un mouvement continu d'angle supérieur à 360°.

2. Dispositif selon la revendication 1, caractérisé en ce que la structure tournante est constituée d'un carter de protection de forme générale cylindrique (18, 18') sensiblement concentrique au pivot central (5) et pourvu d'une ouverture (27) sur sa paroi pour le passage de la vis (2) et de la matière entraînée par elle vers l'entonnoir d'évacuation central (7, 8), le carter cylindrique (18, 18') étant solidaire d'une couronne (13) constituant ladite couronne tournante, recevant l'action d'un pignon d'entraînement (15, 15') venu du second moteur (17, 17') et ainsi apte à provoquer la rotation du carter cylindrique (18, 18') porteur de l'ensemble vis et motorisation.

3. Dispositif selon l'une des revendications 1 ou 2, caractérisé en ce que la couronne fixe (14) est montée solidaire des bords inférieurs du couvercle ou cône de protection (8) et la structure tournante (18) est ainsi montée à rotation, étant suspendue par l'intermédiaire d'un palier tel que palier à billes comportant les deux couronnes respectivement fixe (14) et tournante (13), au bord inférieur dudit couvercle de protection, le second moteur d'entraînement (17) de la structure tournante étant monté solidaire de la paroi de ce couvercle.

4. Dispositif selon l'une des revendications 1 ou 2, caractérisé en ce que la couronne fixe (26) est montée solidaire de la dalle constituant le plancher (1) du silo et elle entoure sensiblement le pourtour de l'orifice ou entonnoir (7) d'évacuation, la structure tournante (18') et la couronne tournante (25) reposent ainsi sur la couronne fixe (26) sur laquelle elles sont montées à rotation par l'intermédiaire de moyens de roulement, formant paliers à billes ou à galets, et le second moteur d'entraînement (17') de la structure tournante est solidaire de la dalle, étant monté sur la paroi interne de l'orifice ou entonnoir d'évacuation.

5. Dispositif selon l'une des revendications 1 à 4, caractérisé en ce que le couvercle ou cône de protection (8) reposant sur le pivot (5) central est lui-même solidaire d'une poutre radiale (9) rejoignant la paroi (10) du silo, ladite poutre étant prévue avec une section en V renversé.

6. Dispositif selon la revendication 5, caractérisé en ce que la poutre radiale (9) à section en V renversé est prévue avec un dimensionnement lui permettant de constituer un organe de protection de la vis d'extraction en position de repos et elle contient intérieurement le second moteur (17) entraînant la structure tournante (18) porteuse de l'ensemble vis et motorisation.

7. Dispositif selon l'une des revendications 5 ou 6, caractérisé en ce que la poutre (9) abrite au moins un conduit de fluide de refroidissement débouchant d'un côté à l'extérieur et accédant de l'autre côté à la zone constituée par l'espace disposé au droit du cône de protection (8), ce conduit permettant l'évacuation des calories dégagées par le moteur d'entraînement de la vis sans fin et le second moteur entraînant la structure tournante.

8. Dispositif selon l'une des revendications 1 à 7, caractérisé en ce que le pivot central (5) porteur du couvercle ou cône de protection (8) est lui-même constitué d'un axe cylindrique creux et il contient intérieurement les circuits d'alimentation (21', 22') respectivement du moteur d'entraînement (4') de la vis sans fin et du second moteur (17') provoquant la rotation de la structure tournante (18'), le pivot cylindrique (5') étant pourvu d'organes permettant la connexion entre lesdits circuits fixes et les raccordements tournants rejoignant le moteur d'entraînement (4') de la vis, tels que des contacts ou joints tournants.

9. Dispositif selon l'une des revendications 1 à 8, caractérisé en ce que le pivot central (5') est relié à sa base aux parois de l'entonnoir (7') ou orifice d'évacuation par l'intermédiaire de traverses (19) montées à angle droit et formant un croisillon (6) dont les extrémités sont scellées dans l'épaisseur de la dalle (1) formant le plancher du silo.

## Claims

1. Extraction device for silos with circular base and evacuation from an opening in the form of a central funnel and recovery by a conveyor in lower position with respect to the floor of the silo, the device comprising an endless screw (2) driven by a motor (4) in substantially central position and adapted angularly to sweep the base of the pile near the floor (1), returning the product towards the evacuation funnel (7), a fixed central support resting on a lower point of abutment integral with the fixed structure of the silo and supporting a protecting cover (8) of generally conical shape which is fixed and adapted to shelter said motor for driving the screw and the orifice constituting the evacuation funnel and the device is characterized in that, on the one hand, said central support is constituted by a pivot (5) abutting on the base of the silo and, on the other hand, in that the assembly constituted by the screw (2) and its motorization (4) is supported, being mounted fast with a rotating ring (13, 25) mounted to rotate on a fixed ring (14, 26) fast with the fixed structure of the silo, the rotating ring, fast with the screw and motorization assembly, being adapted to undergo the action of a drive member such as a second motor (17, 17') adapted to rotate the assembly constituted by the screw and its motorization in its horizontal movement of angular sweeping of the bottom of the silo, in a continuous movement of angle greater than 360°.

2. Device according to Claim 1, characterized in that the rotating structure is constituted by a protecting casing (18, 18') generally cylindrical in shape, substantially concentric to the central pivot (5) and provided with an opening (27) on its wall for the passage of the screw (2) and of the material taken along thereby towards the central evacuation funnel (7, 8), the cylindrical casing (18, 18') being fast with a ring (13) constituting said rotating ring, receiving the action of a drive pinion (15, 15') integral with the second motor (17, 17') and thus adapted to provoke rotation of the cylindrical casing (18, 18') bearing the screw and motorization assembly.

3. Device according to one of Claims 1 or 2, characterized in that the fixed ring (14) is mounted fast with the lower edges of the protecting cover or cone (8) and the rotating structure (18) is thus mounted to rotate, being suspended via a bearing such as ball bearing comprising the two rings, respectively fixed (14) and rotating (13), from the lower edge of said protecting cover, the second drive motor (17) of the rotating structure being mounted fast with the wall of this cover.

4. Device according to one of Claims 1 or 2, characterized in that the fixed ring (26) is mounted fast with the slab constituting the floor (1) of the silo and it surrounds substantially the periphery of the evacuation orifice or funnel (7), the rotating structure (18') and the rotating ring (25) thus rest on the fixed ring (26) on which they are mounted to rotate via rolling means, forming ball or roller bearings, and the second drive motor (17') of the rotating structure is fast with the slab, being mounted on the inner wall of the evacuation orifice or funnel.

5. Device according to one of Claims 1 to 4, characterized in that the protecting cover or cone (8) resting on the central pivot (5) is itself fast with a radial beam (9) joining the wall (10) of the silo, said beam being provided with an upturned V section.

6. Device according to Claim 5, characterized in that the radial beam (9) of upturned V section is provided with dimensions enabling it to constitute a member for protecting the extraction screw in rest position and it internally contains the second motor (17) driving the rotating structure (18) bearing the screw and motorization assembly.

7. Device according to one of Claims 5 or 6, characterized in that the beam (9) shelters at least one cooling fluid conduit opening on one side outside and having access, on the other side, to the zone constituted by the space disposed level with the protecting cone (8), this conduit allowing evacuation of the calories disengaged by the motor driving the endless screw and the second motor driving the rotating structure.

8. Device according to one of Claims 1 to 7, characterized in that the central pivot (5) bearing the protecting cover or cone (8) is itself constituted by a hollow cylindrical shaft and it internally contains the circuits (21', 22') for respectively supplying the motor (4') for driving the endless screw and the second motor (17') provoking rotation of the rotating structure (18'), the cylindrical pivot (5') being provided with members allowing connection between said fixed circuits and the rotating connections joining the motor (4') for driving the screw, such as rotating contacts or joints.

9. Device according to one of Claims 1 to 8, characterized in that the central pivot (5') is connected at its base to the walls of the evacuation funnel (7') or orifice via crosspieces (19) mounted at right angles and forming a spider (6) of which the ends are sealed in the thickness of the slab (1) forming the floor of the silo.

## Patentansprüche

1. Entnahmevorrichtung für Silos mit kreisförmiger Anordnung zur Entleerung durch eine zentrale Öffnung in Form eines Trichters und Aufnahme durch ein in einer zum Siloboden tieferen Position angeordnetes Fördermittel, mit einer von einem im wesentlichen zentral angeordneten Motor (4) angetriebenen Schnecke (2), wobei der Boden der Materialansammlung in der Nähe des Silobodens (1) kreisförmig bestrichen wird und das Material zum Entleerungstrichter (7) hin geführt wird, mit einer festen, auf einem tiefer gelegenen Stützpunkt am festen Aufbau des Silos ruhenden, zentralen Abstützung mit einem festen, im wesentlichen konischen Schutzdeckel (8) zum Schutz des Antriebsmotors der Schnecke und der den Entleerungstrichter bildenden Öffnung, dadurch gekennzeichnet, daß einerseits die zentrale Abstützung aus einem sich auf dem Unterteil des Silos abstützenden Drehzapfen (5) besteht, und daß andererseits die aus Schnecke (2) und ihrer Motorisierung (4) bestehende Baugruppe fest mit einem Drehkranz (13, 25) verbunden ist, der zur Drehung auf einem festen, mit dem festen Aufbau des Silos verbundenen Kranz (14, 26) abgestützt ist, wobei der fest mit der Baugruppe Schnecke und Motorisierung verbundene Drehkranz sich der Wirkung eines Antriebsorgans wie z. B. einem zweiten Motor (17, 17') unterwerfen kann, der die aus der Schnecke und ihrer Motorisierung bestehende Baugruppe bei ihrer kreisförmigen, horizontalen Bewegung am Boden des Silos gemäß einer kontinuierlichen Drehbewegung um mehr als 360° drehen kann.

2. Entnahmevorrichtung nach Anspruch 1, dadurch gekennzeichnet, daß die Drehstruktur aus einem im wesentlichen zylindrischen Schutzgehäuse (18, 18') besteht, das im wesentlichen konzentrisch zum zentralen Drehzapfen (5) angeordnet ist und mit einer Öffnung (27) in ihrer Wand zum Durchgang der Schnecke (2) und des von dieser zum zentralen Entleerungstrichter (7, 8) transportierten Materials versehen ist, wobei das zylindrische Gehäuse (18, 18') fest mit einem den Drehkranz bildenden und die Wirkung eines Antriebsritzels (15, 15') am zweiten Motor (17, 17') aufnehmenden Kranz (13) verbunden ist, wodurch die Drehung des zylindrischen, die Baugruppe Schraube und Motorisierung tragenden Gehäuses (18, 18') bewirkt wird.

3. Entnahmevorrichtung nach einem der Ansprüche 1 oder 2, dadurch gekennzeichnet, daß der feste Kranz (14) fest an den Innenrändern des Schutzdeckels oder -konus (8) angebracht ist, und daß der Drehaufbau (18) somit zur Drehung abgestützt ist, indem er über ein den festen (14) und den Drehkranz (13) beinhaltendes Lager, wie z. B. ein Kugellager, am unteren Rand des Schutzdeckels aufgehängt ist, wobei der zweite Antriebsmotor (17) des Drehaufbaus fest an der Wand des Deckels angebracht ist.

4. Entnahmevorrichtung nach einem der Ansprüche 1 oder 2, dadurch gekennzeichnet, daß der feste Kranz (26) fest an der den Siloboden (1) bildenden Platte angebracht ist und daß er im wesentlichen den Umfang der Entleerungsöffnung (7) umgibt, wobei somit der Drehaufbau (18') und der Drehkranz (25) auf dem festen Kranz (26) ruhen, auf dem sie zur Drehung über Kugel- oder Wälzlager bildende Rollelemente abgestützt sind, und daß der zweite Antriebsmotor (17') des Drehaufbaus fest mit der Platte verbunden ist, indem er an der Innenwand der Entleerungsöffnung oder des Entleerungstrichters angebracht ist.

5. Entnahmevorrichtung nach einem der Ansprüche 1 bis 4, dadurch gekennzeichnet, daß der auf dem zentralen Drehzapfen (5) ruhende Schutzdeckel oder -konus (8) selbst fest mit einem radialen, zur Wand (10) des Silos reichenden Träger verbunden ist, wobei der Träger mit einem umgekehrten V-Querschnitt versehen ist.

6. Entnahmevorrichtung nach Anspruch 5, dadurch gekennzeichnet, daß der radiale Träger (9) mit umgekehrtem V-Querschnitt mit einer Abmessung versehen ist, die es ihm erlaubt, ein Schutzelement der Entleerungsschnecke in der Ruhestellung zu bilden, und daß er im Innern den zweiten Antriebsmotor (17) für den die Baugruppe Schnecke und Motorisierung tragenden Drehaufbau (18) beinhaltet.

7. Entnahmevorrichtung nach einem der Ansprüche 5 oder 6, dadurch gekennzeichnet, daß der Träger (9) wenigstens eine einerseits außen und andererseits in der senkrecht zum Schutzkonus (8) gebildeten Zone mündende Leitung für eine Kühlflüssigkeit schützt, wobei diese Leitung die Abfuhr der vom Antriebsmotor für die Schnecke und vom Antriebsmotor für den Drehaufbau entwickelten Wärme erlaubt.

8. Entnahmevorrichtung nach einem der Ansprüche 1 bis 7, dadurch gekennzeichnet, daß der den Schutzdeckel oder -konus (8) tragende, zentrale Drehzapfen (5) selbst aus einer hohlen Zylinderachse besteht, und daß er im Innern die Versorgungsleitungen (21', 22') für den Antriebsmotor (4') der Schnecke und für den zweiten, die Drehung des Drehaufbaus (18') bewirkenden Motor (17') enthält, wobei der Drehzapfen (5') mit Elementen versehen ist, die die Verbindung der festen Leitungen mit den Drehanschlüssen des Antriebsmotors (4') erlauben, wie z. B. Drehkontakte oder -verbindungen.

9. Entnahmevorrichtung nach einem der Ansprüche 1 bis 8, dadurch gekennzeichnet, daß der zentrale Drehzapfen (5') an seiner Unterseite mit den Wänden des Entleerungstrichters oder der Entleerungsöffnung (7') über im rechten Winkel angebrachten Traversen (19) verbunden ist, die ein Kreuzstück (6) bilden, dessen Enden in der den Siloboden bildenden Platte (1) vergossen sind.

*Fig: 1*

*Fig: 2*

EP 0 143 057 B1

*Fig. 3*

10

8    9

5

17

14  4

13    15

1

11

18

2    6

7

*Fig. 5*

12'  12  18

8    4    2    9

14    15

5    8

18    13

*Fig. 4*

EP 0 143 057 B1

Fig.6

Fig: 7

*Fig. 8*